# EUROPEAN PATENT APPLICATION

(11) **EP 2 073 466 A1**
(43) Date of publication of application: **24.06.2009**
(21) Application number: 07025031.1
(22) Date of filing: 21.12.2007
(51) Int. Cl.: H04L 12/58

(54) **System and method for e-mail communication using mobile devices, in particular mobile phones, on basis of at least one of mobile phone numbers and graphics or image personalization technology**

(71) Applicant: Deutsch Technologies GmbH, 01159 Dresden (DE)
(72) Inventor: Deutsch, Christoph, 01326 Dresden (DE); Roever, Jürgen, 01309 Dresden (DE)
(74) Representative: Jordan, Volker Otto Wilhelm

(57) **Abstract**

The invention proposes e-mail communication using e-mail addresses including a mobile phone number in the domain part. Such an e-mail address uniquely identifies a particular mobile device in a mobile phone telecommunications network and therefore offers the possibility to offer e-mail communication to a user of this particular mobile device, even if the user has not yet an e-mail address or not yet access to an e-mail account. The invention further proposes to directly or indirectly include personalized graphical or image contents into a respective e-mail for making the e-mail communication more attractive. E-mail communication according to one or both of these proposals might substitute short message communication using SMS or MMS between mobile phones and other mobile devices having mobile phone functionality.

## Description

Electronic communication using e-mails is nowadays a very important way to communicate between different persons or different computers, including mobile devices having corresponding functionalities. Mobile devices, in particular in the form of mobile phones or other mobile devices having mobile phone functionality, are also used for another kind of electronic communication, namely by means of short messages using a short message service of a mobile phone telecommunications network having wireless telecommunications infrastructure. Such mobile devices of course are further used for voice communication.

For voice communication, namely making calls to respective other mobile devices and receiving calls from other mobile devices, the respective mobile device is uniquely identified in the mobile phone telecommunication network by a unique mobile phone number.

For e-mail communication, the mobile devices may have a local e-mail client functionality or a local e-mail client program, adapted to access a respective remote e-mail server of the data communication infrastructure of a respective e-mail service provider, said access involving wireless data communication via the mobile phone telecommunications network (e.g. on basis of one of the following standards: GSM, HSCSD, GPRS, EDGE, UMTS, HSDPA, CDMA and other 3G standards) or via a wireless data communication network being part of or connected with the internet, such as a wireless local area network (WLAN, e.g. on basis of one of the following standards: IEEE 802.11 (Wi-Fi), including 802.11a, 802.11b, 802.11g, 802.11n, WiMAX and other wireless network standards). State of the art mobile devices and mobile phones can use both kinds of wireless data communication and may use alternatively plural respective standards.

Another kind of e-mail communication is based on using a remote webmail service of an e-mail service provider, wherein a web user interface is accessed using a browser functionality or browser program of a respective computer or mobile device, wherein in case of a mobile device said access involves wireless data communication via at least one of the mobile phone telecommunication networks and a wireless data communication network being part of or connected with the internet.

The communication via short messages, conventionally known as SMS or MMS, is based on destination information included in a respective short message, said destination information comprising a respective mobile phone number associated to a particular mobile phone account of a mobile phone provider and therefore to a particular mobile device. On the other hand, e-mail communication over the internet is based on e-mail addresses which have a domain part corresponding to a domain name used by an e-mail service provider and a local part identifying a particular e-mail account registered at the e-mail service provider. The usual format of a respective e-mail address is as follows: "local-part"@"domain-name", such as "mike@provider.com".

Communicating via e-mails on the one hand and communicating via short messages on the other hand are alternative kinds of electronic communication without common aspects and technical linkage, except that some e-mail providers offer the possibility that the receipt of an incoming e-mail at a server may trigger the sending of a notification short message to a mobile device identified by a mobile phone number, so that the user of this mobile device then may decide to look after his e-mails, either from a stationary computer or using his mobile device, either - if enabled - by direct e-mail communication using a local e-mail client functionality or local e-mail client program or - alternatively - by indirect e-mail communication on basis of internet access to a webmail service using a browser or browser functionality.

Accordingly, it is state of the art that mobile devices are used for e-mail communication. Accordingly, a system for e-mail communication between mobile devices is known, comprising a mobile phone telecommunications network having wireless telecommunications infrastructure, a plurality of mobile devices in the form of at least one of mobile phones and other mobile devices having mobile phone functionality and data communication infrastructure of at least one e-mail service provider allowing direct or indirect e-mail communication between said mobile devices, wherein each mobile device is uniquely identified in the mobile phone telecommunications network by a respective mobile phone number allowing, on basis of at least one mobile phone telecommunications standard, to call a respective other mobile device for voice communication and to receive a call from a respective other mobile device for voice communication, and wherein each mobile device is adapted for at least one of
a) direct e-mail communication including sending and receiving e-mails using a local e-mail client functionality or a local e-mail client program of the mobile device, the local e-mail client functionality or local e-mail client program being adapted to access at least one remote e-mail server of said data communications infrastructure at least for sending and possibly for receiving e-mails, said access involving wireless data communication via at least one of the mobile phone telecommunications network and a wireless data communication network being part of or connected with the internet,
   and
b) indirect e-mail communication involving access to at least one remote web server of said data communications infrastructure which allows the use of a webmail service of the e-mail service provider, the webmail service providing e-mail communication including sending and receiving e-mails and a web user interface to be accessed using a browser functionality or browser program of the mobile device, said access involving wireless data communication via at least one of the mobile phone telecommunications network and a wireless data communication network being part of or connected with the internet,
wherein said e-mail communication is based on at least one e-mail communication standard, according to which the destination of a respective e-mail is given by a destination e-mail address included in the respective e-mail, said destination e-mail address having a domain part corresponding to a domain name used by the e-mail service provider and a local part identifying a particular e-mail account registered at the e-mail service provider. Conventionally, the wireless telecommunication infrastructure is adapted to communicate short messages between or to mobile devices via at least one short message service (SMS) on basis of said at least one mobile phone telecommunications standard, wherein a respective short message includes destination information which comprises a respective mobile phone number so that the short message is communicated by the short message service (SMS) to that mobile device which is uniquely identified by that mobile phone number in the mobile phone telecommunications network.

Further, a corresponding method of e-mail communication between mobile devices in the form of at least one of mobile phones and other mobile devices having mobile phone functionality is known, which uses data communication infrastructure of at least one e-mail service provider allowing direct or indirect e-mail communication between said mobile devices. Each mobile device is uniquely identified in a mobile phone telecommunication network having wireless telecommunications infrastructure by a respective mobile phone number allowing, on basis of at least one mobile phone telecommunications standard, to call a respective other mobile device for voice communication and to receive a call from a respective other mobile device for voice communication, and wherein a respective each mobile device is used for at least one of
a) direct e-mail communication including sending and receiving e-mails using a local e-mail client functionality or a local e-mail client program of the mobile device to access at least one remote e-mail server of said data communications infrastructure at least for sending and possibly for receiving e-mails, said access involving wireless data communication via at least one of the mobile phone telecommunications network and a wireless data communication network being part of or connected with the internet,
   and
b) indirect e-mail communication involving access to at least one remote web server of said data communications infrastructure for using a webmail service of the e-mail service provider for e-mail communication including sending and receiving e-mails, wherein a web user interface is accessed using a browser functionality or browser program of the mobile device, said access involving wireless data communication via at least one of the mobile phone telecommunications network and a wireless data communication network being part of or connected with the internet,
wherein said e-mail communication is based on at least one e-mail communication standard, according to which the destination of a respective e-mail is given by a destination e-mail address included in the respective e-mail, said destination e-mail address having a domain part corresponding to a domain name used by the e-mail service provider and a local part identifying a particular e-mail account registered at the e-mail service provider. The wireless telecommunications infrastructure generally can be used to communicate short messages between or to mobile devices via at least one short message service (SMS) on basis of said at least one mobile phone telecommunications standard, wherein a respective short message includes destination information which comprises a respective mobile phone number so that the short message is communicated by the short message service (SMS) to that mobile device which is uniquely identified by that mobile phone number in the mobile phone telecommunications network.

For the user of a mobile device it is a nice choice either to use short messages or to use e-mails for electronic communication. Young people often prefer short message communication, since they will know that their friends all have a mobile device which at least is enabled to receive short messages. Short messages in the form of multimedia messages even allow to send photos or mobile phone ring tones and other multimedia contents. However, such multimedia short messages often involve substantial costs due to the current pricing policies of most mobile phone providers. Further, not all state of the art mobile devices are technically enabled to send and receive multimedia short messages (MMS). Even normal short messages (SMS) having only text contents may involve substantial costs depending on a particular mobile phone contract with a particular mobile phone provider. Accordingly, there are some arguments to substitute short messages by e-mails for electronic communication. Conventionally, however, this substitution is possible only to some extent, since often the e-mail address of another person is not known. Further, e-mail communication is of course limited to e-mail communication with those persons who have an e-mail account and, correspondingly, an e-mail address or at least have access to an e-mail account and therefore can receive and send e-mails.

It is one object of the invention to facilitate or enable e-mail communication between mobile devices of the mentioned kind. To this end, concerning the system according to the invention, it is proposed that e-mail accounts of said e-mail service provider are associated to a respective mobile phone number uniquely identifying a particular mobile device in the mobile phone telecommunications network, wherein for each e-mail account an e-mail address is registered in a database of the e-mail service provider, said e-mail address including the respective mobile phone number in the local part and being enabled for at least one of said direct and indirect e-mail communication.

Concerning the method according to the invention, it is proposed that in said e-mail communication e-mail addresses are used which include in the local part a respective mobile phone number uniquely identifying a particular mobile device in the mobile phone telecommunications network. In particular, it is proposed that e-mail accounts of said e-mail service provider are associated to a respective mobile phone number uniquely identifying a particular mobile device in the mobile phone telecommunications network,
wherein for each e-mail account an e-mail address is registered in a database of the e-mail service provider, said e-mail address including the respective mobile phone number in the local part and being enabled for at least one of said direct and indirect e-mail communication.

Preferably, the system and method of the invention make use of the possibility to send and to receive short messages. Accordingly, it is proposed that said data communication infrastructure is adapted to send, via at least one short message service (SMS), at least one short message to a respective mobile device which is uniquely identified by a mobile phone number to which a respective e-mail account is associated or shall be associated. Further, it is proposed that said data communications infrastructure is adapted to send, via at least one short message service (SMS), at least one short message to a respective mobile device which is uniquely identified by a mobile phone number included in the local part of a destination e-mail address of an e-mail.

In accordance with the method according to the invention, said data communications infrastructure may send, via at least one short message service (SMS), at least one short message to a respective mobile device which is uniquely identified by a mobile phone number to which a respective e-mail account is associated or shall be associated. Further, said data communications infrastructure may send, via at least one short message service (SMS), at least one short message to a respective mobile device which is uniquely identified by a mobile phone number included in the local part of a destination e-mail address of an e-mail.

For including further mobile devices into the system and enabling e-mail communication according to the invention therebetween, it is proposed that at least one web server of the data communications infrastructure provides a web user interface to be accessed from a computer connected to the internet using an browser functionality or browser program of the computer or to be accessed from a mobile device using a/the browser functionality or browser program of the mobile device, wherein said web user interface allows to register an e-mail account in a database of the e-mail service provider, the e-mail account being associated to a mobile phone number uniquely identifying a/the mobile device in the mobile phone telecommunications network, wherein the registration of the e-mail account involves the registration of an e-mail address having said mobile phone number included in the local part. Accordingly, the method may involve at least one web server of the data communications infrastructure providing a web user interface which is accessed from a computer connected to the internet using an browser functionality or browser program of the computer or which is accessed from a mobile device using a/the browser functionality or browser program of the mobile device, wherein by interaction with said web user interface an e-mail account in a database of the e-mail service provider is registered, the e-mail account being associated to a mobile phone number uniquely identifying a/the mobile device in the mobile phone telecommunications network, wherein the registration of the e-mail account involves the registration of an e-mail address having said mobile phone number included in the local part.

For achieving a proper authorization it is proposed that the data communications infrastructure is adapted to automatically send a short message into which destination information is included which comprises said mobile phone number associated to said e-mail account and to only enable said e-mail account for at least one of direct and indirect e-mail communication using the e-mail address having the mobile phone number in the local part if a predefined response is received on said short message. The predefined response may be at least one of the predefined access to a web page hosted by the/a web server of the data communications infrastructure, preferably following a web link included in said short message, and a response short message sent from the mobile device identified by said mobile phone number to a predefined mobile phone number included in said short message.

Accordingly, the method may involve that the data communications infrastructure automatically sends a short message into which destination information is included which comprises said mobile phone number associated to said e-mail account and only enables said e-mail account for at least one of direct and indirect e-mail communication using the e-mail address having the mobile phone number in the local part if a predefined response is received on said short message. To this end, a web page hosted by the/a web server of the data communications infrastructure may be accessed to give the predefined response, preferably following a web link included in said short message, or/and a response short message is sent from the mobile device identified by said mobile phone number to a predefined mobile phone number included in said short message to give the predefined response.

As mentioned, e-mail communication is limited to communication between persons having an e-mail account with an e-mail address or to persons having at least access to an e-mail account with an e-mail address. However, the core idea of the invention to use e-mail addresses which include a respective mobile phone number in the local parts enables to easily extend the reach of e-mail communication to persons who presently have no e-mail account or do not even have access to an e-mail account. For achieving this extension of reach, the invention proposes that the data communications infrastructure is adapted to automatically send a short message on basis of an e-mail provided by direct or indirect e-mail communication for sending to a destination e-mail address, if no e-mail account associated to a mobile phone number taken from the local part of said destination e-mail address is registered in the database of the e-mail service provider, said short message including destination information which comprises said mobile phone number. Accordingly, the method preferably involves that the data communications infrastructure automatically sends a short message on basis of an e-mail provided by direct or indirect e-mail communication for sending to a destination e-mail address, if no e-mail account associated to a mobile phone number taken from the local part of said destination e-mail address is registered in the database of the e-mail service provider, said short message including destination information which comprises said mobile phone number.

In principle, it would be sufficient that the short message includes text and possibly image and graphical data which were included in an e-mail directed to an e-mail address for which no e-mail account is registered. This kind of realisation is within the scope of the invention.

However, it is preferred that this short message has the aim to extend e-mail communication to persons not having a registered e-mail account or having no registered e-mail account at that particular e-mail service provider identified by the domain part and offering the e-mail accounts associated to a respective mobile phone number. Accordingly, the short message may include an invitation to start with e-mail communication at least concerning the viewing or reading of that particular e-mail which triggered the short message. This invitation preferably includes a web link leading to a particular web page, where the user may view the e-mail and may register a corresponding e-mail account for himself or to make a preregistered preliminary (limited) e-mail account to his own full e-mail account.

In view of these possible implementations, it is proposed that the data communications infrastructure is adapted to automatically register an e-mail account in a database of the e-mail service provider on basis of an e-mail provided by direct or indirect e-mail communication for sending to a destination e-mail adress, if no e-mail account associated to a mobile phone number taken from the local part of said destination e-mail address is registered in the database of the e-mail service provider, wherein the e-mail account is automatically registered in association to said mobile phone number uniquely identifying a/the mobile device in the mobile phone telecommunications network, wherein this registration of the e-mail account involves the registration of said destination e-mail address as e-mail address. Accordingly, the method according to the invention may involve that the data communications infrastructure automatically registers an e-mail account in a database of the e-mail service provider on basis of an e-mail provided by direct or indirect e-mail communication for sending to a destination e-mail adress, if no e-mail account associated to a mobile phone number taken from the local part of said destination e-mail address is registered in the database of the e-mail service provider, wherein the e-mail account is automatically registered in association to said mobile phone number uniquely identifying a/the mobile device in the mobile phone telecommunications network, wherein the registration of this e-mail account involves the registration of said destination e-mail address as e-mail address.

Further, the data communications infrastructure of the system according to the invention may be adapted to automatically send a short message into which destination information is included which comprises said mobile phone number taken from the local part and preferably to only enable said e-mail account at least for indirect e-mail reading access using the webmail service, if desired for at least one of direct and indirect e-mail communication using the e-mail address having the mobile phone number in the local part, if a predefined response is received on said short message. Accordingly, the method of the invention may involve that the data communications infrastructure automatically sends a short message into which destination information is included which comprises said mobile phone number taken from the local part and preferably only enables said e-mail account at least for indirect e-mail reading access using the webmail service, if desired for at least one of direct and indirect e-mail communication using the e-mail address having the mobile phone number in the local part, if a predefined response is received on said short message. The short message may include invitation text inviting the person receiving the short message.

The predefined response may be at least one of a predefined access to a web page hosted by the/a web server of the data communications infrastructure, preferably following a web link included in said short message, and a response short message sent from the mobile device identified by said mobile phone number to a predefined mobile phone number included in said short message. Correspondingly, according to the method of the invention, a web page hosted by the/a web server of the data communications infrastructure may be accessed to give said predefined response, preferably following a web link included in said short message, or/and a response short message may be sent from the mobile device identified by said mobile phone number to a predefined mobile phone number included in said short message to give said predefined response.

There are different possibilities, which functionalities are offered by such a preregistered or preliminary e-mail account. One proposal is that the data communications infrastructure is adapted to only enable, preferably on basis of said predefined response, indirect e-mail communication in the form of access to said e-mail provided for sending to the destination e-mail address using the webmail service, so that relevant contents of said e-mail is displayed. According to the method, the data communications infrastructure would only enable, preferably on basis of said predefined response, indirect e-mail communication in the form of access to said e-mail provided for sending to the destination e-mail address using the webmail service, so that relevant contents of said e-mail is displayed.

Another proposal is that the data communications infrastructure is adapted to only enable, preferably on basis of said predefined response, indirect e-mail communication in the form of access to said e-mail provided for sending to the destination e-mail address using the webmail service, so that relevant contents of said e-mail is displayed, as well as e-mail responding access for sending a response e-mail to a sender e-mail address included in said e-mail using the webmail service. Accordingly, according to the method, the data communications infrastructure would only enable, preferably on basis of a predefined response, indirect e-mail communication in the form of access to said e-mail provided for sending to the destination e-mail address using the webmail service, so that relevant contents of said e-mail is displayed, as well as e-mail responding access for sending a response e-mail to a sender e-mail address included in said e-mail using the webmail service.

According to another proposal, the data communications infrastructure is adapted to only enable, preferably on basis of said predefined response, indirect e-mail communication with said destination e-mail address using the webmail service. According to the method of the invention, the data communications infrastructure would only enable, preferably on basis of said predefined response, indirect e-mail communication with said destination e-mail address using the webmail service, but no e-mail communication with other e-mail addresses.

Of course, if such a limited preliminary e-mail account was registered on basis of said predefined response or already on basis of the e-mail having the particular e-mail address including a mobile phone number, there should be a possibility to "upgrade" said e-mail account to a "normal" e-mail account. To this end, it is proposed that the data communications infrastructure is adapted to enable said e-mail account registered for at least one of direct and indirect e-mail communication using the e-mail address having the mobile phone number in the local part on basis of predefined interaction with the/a web page hosted by the/a web server of the data communications infrastructure. For the method of the invention it is provided that the data communications infrastructure enables said e-mail account for at least one of direct and indirect e-mail communication using the e-mail address having the mobile phone number in the local part on basis of predefined interaction with the/a web page hosted by the/a web server of the data communications infrastructure.

Preferably, an e-mail account registered in said data base and being enabled for direct and indirect e-mail communication allows to define contacts in a user interface of said webmail service, each contact specifying a destination e-mail address having a local part which includes a mobile phone number and belonging to an other e-mail account registered in said data base. Accordingly, the method of the invention may involve that for an e-mail account registered in said data base and being enabled for direct and indirect e-mail communication the user defines contacts in a user interface of said webmail service, each contact specifying a destination e-mail address having a local part which includes a mobile phone number and belonging to an other e-mail account registered in said data base.

One possibility is that a limited number of contacts can be defined. Preferably, a limited number of contacts can be defined for an e-mail account according to a first type and a higher number or unlimited number of contacts can be defined for an e-mail account of a second type.

It is proposed that an e-mail account according to the first type, which is a free e-mail account, can be (and - according to the method - is converted) into an e-mail account according to the second type on basis of predefined interaction with the/a web page hosted by the/a web server of the data communications infrastructure, the predefined interaction involving the provision of payment data.

E-mails and correspondingly short messages including only text information make sense in business context, but are boring for personal electronic communication. Accordingly, it is proposed that enabled direct or indirect e-mail communication includes sending and receiving e-mails having at least one of direct and indirect graphical or image contents or at least includes access to a respective e-mail for displaying relevant contents thereof including at least one of direct and indirect graphical or image contents.

Preferably - and as is independently proposed according to another independent aspect of the invention - said direct and indirect graphical or image contents is personalized graphical or image contents, said personalized graphical or image contents being generated on basis of text data and image or graphics data by an image or graphics processor. In this respect it is proposed that the image or graphics processor generates said graphical or image contents on basis of graphics or image personalization technology, such as DirecType^{®} technology of Deutsch Technologies GmbH (Dresden, Germany; see e.g. www.directype.org).

Such personalized image or graphics contents offer many creative possibilities for the user and provide an incentive to use the e-mail service provider offering corresponding contents and functionalities. This aspect is independent of the aspect according to which e-mail addresses on basis of mobile phone numbers are used. Accordingly, the invention, according to this other aspect, independently proposes for the system and method identified in the above introductory portion of this description that direct or indirect e-mail communication includes sending and receiving e-mail having at least one of direct and indirect graphical or image contents or at least includes access to a respective e-mail for displaying relevant contents thereof including at least one of direct and indirect graphical or image contents, said direct or indirect graphical or image contents being personalized graphical or image contents and being generated on basis of text data and image or graphics data by an image or graphics processor.

Direct graphical or image contents may be at least one of graphical or image data and at least one image or graphics file included in or attached to a respective e-mail. For the case of direct e-mail communication it is proposed that the local e-mail client program or local e-mail client functionality is adapted to automatically display said direct graphical or image contents. For the case of indirect e-mail communication it is proposed that the web user interface of the webmail service is adapted to automatically display said direct graphical or image contents. Accordingly, the method according to the invention may provide that in case of direct e-mail communication the local e-mail client program or local e-mail client functionality automatically displays said direct graphical or image contents and that in case of indirect e-mail communication the web user interface of the webmail service automatically displays said direct graphical or image contents.

Indirect graphical or image contents may be at least one of graphical or image data and at least one image or graphics file hosted on a server of the data communications infrastructure or on a server connected therewith,
wherein a link leading to said graphical image contents is included in a respective e-mail. For the case of direct e-mail communication it is proposed that the local e-mail client program or local e-mail client functionality is adapted to automatically access and display said indirect graphical or image contents, said access involving wireless data communication via at least one of the mobile phone telecommunications network and said wireless data communications network being part of or connected with the internet. For the case of indirect e-mail communication it is proposed that the web user interface of the webmail service is adapted to automatically access and display said indirect graphical or image contents. Accordingly, the method according to the invention may provide that in case of direct e-mail communication the local e-mail client program or local e-mail client functionality automatically accesses and displays said indirect graphical or image contents, said access involving wireless data communication via at least one of the mobile phone telecommunications network and said wireless data communication network being part of or connected with the internet, and that in case of indirect e-mail communication the web user interface of the webmail service automatically accesses and displays said indirect graphical or image contents.

Ordinary graphical or image contents may comprise predefined images, logos, any other graphics and the like or photos, e.g. photos taken with the mobile device having camera functionality. Such contents is within the scope of the present invention. According to a special, already addressed aspect, however, it is intended to provide different kinds of image or graphics contents which reflects personal style, mood and preference of a particular user (the user sending an e-mail as well as the user receiving the e-mail, at least from the position of view of the user sending the e-mail). In particular, it is aimed to provide personalized image or graphics contents.

To this end, it is proposed that a web server of the data communications infrastructure or connected therewith has a web user interface associated to an image or graphics processor adapted to generate graphical or image contents on basis of at least one of user input via the user interface and graphics or image template data, wherein said user interface can be accessed using a browser functionality or browser program of a respective mobile device and preferably can be accessed via or is included in the web user interface of the webmail service, wherein generated graphical or image contents can be included as direct or indirect graphical or image contents in a respective e-mail to be sent to a destination e-mail address. Concerning the method it is proposed, that a web server of the data communications infrastructur or connected therewith has a web user interface associated to an image or graphics processor, said image or graphics processor being used to generate graphical or image contents on basis of at least one of user input via the user interface and graphics or image template data, wherein said user interface is accessed using a browser functionality or browser program of a respective mobile device, preferably via or from within the web user interface of the webmail service, wherein generated graphical or image contents are included as direct or indirect graphical or image contents in a respective e-mail which is sent to a destination e-mail address.

Concerning indirect graphical or image contents it is not necessary that actually a corresponding image or graphics file is stored on the server. It is sufficient that definition data, in particular image and text data defining a particular personalized image or graphics, are stored on the server and correspondingly a particular kind of image or graphics data is hosted on the server, which allow the generation or regeneration of the graphics or image contents corresponding to the indirect graphical or image contents of a respective e-mail. Accordingly, such graphical or image data possibly being stored on the server may comprise at least one identification code identifying an image, e.g. photo, selected by the user who sent an e-mail, and text information entered by this user for personalizing this image, possibly by superposing image elements to form characters and words, and possibly superposition code data defining a particular selected superposition between different images or between at least one image and image elements forming characters and words. Only on access of the local e-mail client program or local e-mail functionality for displaying said indirect graphical or image contents or on access by the webmail service to display said indirect graphical or image contents the graphical or image contents to be displayed will first be generated by the graphics or image processor on basis of said particular graphical or image data and then transferred to the local e-mail client program or local e-mail functionality or the web user interface of the webmail service, respectively.

Preferably, said image or graphic processor is adapted to generate graphical or image contents, which comprises at least one predefined first image or graphics template contents on which is superimposed at least one predefined second image or graphics template contents, wherein at least one of an arrangement or repeated arrangement of said second image or graphics contents or at least one graphics or image element thereof with respect to the first image or graphics contents and a kind of superposition of said first and second image and graphics contents is defined by user input. For the method it is proposed that said image or graphics processor generates graphical or image contents, which comprises at least one predefined first image or graphics template contents on which at least one predefined second image or graphics template contents is superimposed,
wherein at least one of an arrangement or repeated arrangement of said second image or graphics contents or at least one graphics or image element thereof with respect to the first image or graphics contents and a kind of superposition of said first and second image and graphics contents is defined by user input entered into the web user interface.

It is proposed that said user input comprises text input which defines a repeated arrangement of said second image or graphics contents or at least one graphics or image element thereof so said characters are formed from said repeatedly superimposed contents or elements which display said text within said first image or graphics contents. There may be variations between said repeated contents or elements. Accordingly, the method could involve that into the web user interface user input is entered, comprising text input which defines a repeated arrangement of said second image or graphics contents or at least one graphics or image element thereof (possibly being varied) so said characters are formed from said repeatedly superimposed contents or element which display said text within said first image or graphics contents.

According to a particular embodiment, the web user interface allows the selection of at least one of the first and second image or graphics template contents for the superposition from a plurality of different image or graphics template contents. Accordingly, the method might comprise the step that from the web user interface at least one of the first and second image or graphics template contents is selected from a plurality of different image or graphics template contents for the superposition.

A business model of the e-mail service provider might be based on including advertisements on his web pages, in particular the web user interface. Another possibility is to include advertisements or other kind of advertising and promotion into the e-mails, preferably into the graphics or image contents. This and other objectives may be achieved if said image or graphics processor is adapted to include into said superposition at least one predefined third image or graphics template contents or text contents on basis of administration data. Accordingly, the method might involve the step that the image or graphics processor includes into said superposition at least one predefined third image or graphics template contents or text contents on basis of administration data.

The system and method of the invention may offer and comprise many other functionalities, features and method steps, respectively, which lead to advantages. One important aspect is that the direct e-mail communication or/and the indirect e-mail communication shall be facilitated, in particular with respect to extending this communication to new users. To this end, it is proposed that for enabling or facilitating direct e-mail communication for a particular mobile device said data communications infrastructure is adapted to automatically send or to send on request a short message into which destination information is included which comprises the mobile phone number of said particular mobile device and into which configuration data are included which enable the local e-mail client program or the local e-mail functionality of said mobile device to access said at least one remote e-mail server for said direct e-mail communication. Accordingly, a method step may involve, for enabling or facilitating direct e-mail communication for a particular mobile device, that said data communications infrastructure automatically sends or sends on request a short message into which destination information is included which comprises the mobile phone number of said particular mobile device and into which configuration data are included which enable the local e-mail client program or the local e-mail functionality of said mobile device to access said at least one remote e-mail server for said direct e-mail communication.

Further, it is proposed for enabling or facilitating indirect e-mail communication for a particular mobile device that said data communications infrastructure is adapted to automatically provide or provide on request at least one of bookmark data leading to the web user interface of said webmail service and cookie data identifying a particular e-mail account registered in said database to the browser functionality or browser program of said particular mobile device, wherein in case of such cookie data the web user interface is adapted to access such cookie data and respond thereto by providing automatic or easy access to the user interface under said particular e-mail account. Accordingly, the method may involve the step that, for enabling or facilitating indirect e-mail communication for a particular mobile device, said data communications infrastructure automatically provides or provides on request at least one of bookmark data leading to the web user interface of said webmail service and cookie data identifying a particular e-mail account registered in said database to the browser functionality or browser program of said particular mobile device, wherein in case of such cookie data the web user interface accesses such cookie data and responds thereto by providing automatic or easy access to the user interface under said particular e-mail account.

Another aspect is that a user, to whom an e-mail is directed, receives that e-mail automatically and without delay. To this end, it is proposed that said data communications infrastructure has a push-server functionality for providing a respective e-mail to a particular mobile device to be received by the local e-mail client program or local e-mail client functionality of said mobile device in direct e-mail communication without preceding request access to the remote e-mail server by said local e-mail client program or local e-mail client functionality. Accordingly, the method may involve the step that said data communications infrastructure, on basis of a push-server functionality, provides a respective e-mail to a particular mobile device and is received by the local e-mail client program or local e-mail client functionality of said mobile device in direct e-mail communication without preceding request access to the remote e-mail server by said local e-mail client program or local e-mail client functionality to request.

The invention is further explained and exemplified on basis of a particular embodiment and example scenarios with reference to diagrams and drawings shown in the figures.

Fig. 1 is a system diagram according to a preferred embodiment of the invention showing schematically different data communication routes for internet access to web servers, for sending and receiving e-mails and for sending and receiving short messages.

Fig. 2 is a schematic data flow diagram exemplifying a first scenario in agreement with a possible implementation of the system and method according to the invention.

Fig. 3 is a schematic data flow diagram exemplifying a second scenario in agreement with a possible implementation of the system and method according to the invention.

Fig. 4 is a schematic data flow diagram exemplifying a third scenario in agreement with a possible implementation of the system and method according to the invention.

Fig. 5 is a drawing which exemplifies a photo which is personalized to include text information in the form of graphic or picture elements superimposed on the underlying photo as can be achieved by means of an image or graphics processor of a preferred embodiment of the invention for generating graphical or image contents associated to a respective e-mail.

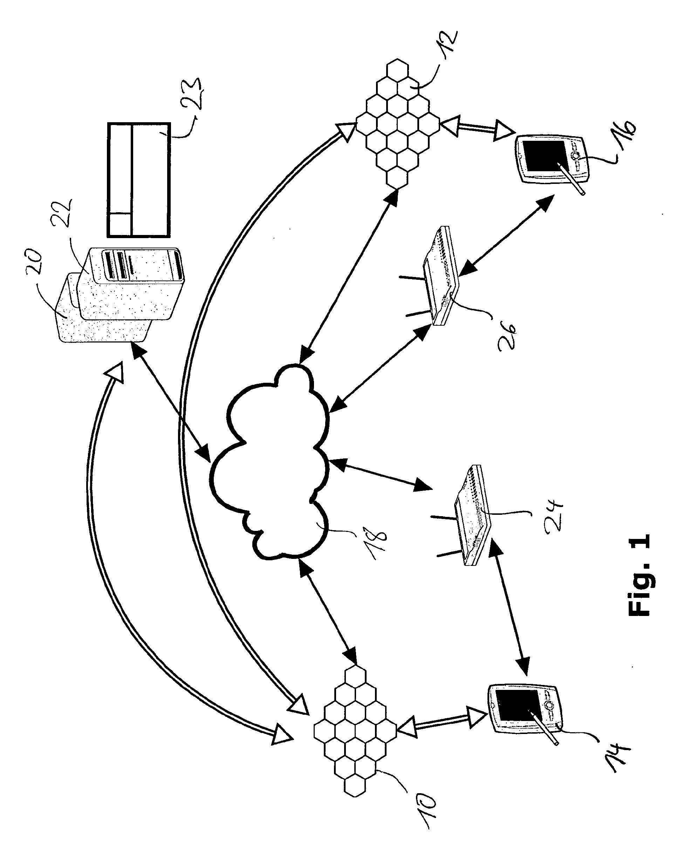

A system for communication between mobile devices in the form of mobile phones and other mobile devices having mobile phone functionality, such as different kinds of smart phones, comprises wireless telecommunications infrastructure of a mobile phone telecommunications network, which, in the schematic diagram of Fig. 1, is represented by cells 10 and 12 of a cellular network. On basis of this wireless telecommunications infrastructure voice communication is possible between two mobile phones or two smart phones 14 and 16, the voice communication channel being represented by double lined arrows. Besides voice communication, i.e. phone calls going from one mobile phone to the other mobile phone, generally also short message communication is possible, the short messages also being communicated between the mobile phones or smart phones via the wireless telecommunications infrastrucutre, using a short message service of the mobile phone provider. The communication channels again are represented by the two-lined arrows.

Today, mobile phone providers also allow access to the internet over the mobile phone telecommunications network. The internet is represented in Fig. 1 by cloud 18. Accordingly, there is a communication link between the wireless telecommunications infrastructure and internet infrastructure represented by arrows between the cells 10 and 12 and cloud 18. The data communication between a respective mobile device and the wireless telecommunications infrastructure of the mobile phone telecommunications network for this internet access (which is an internet access intermediated by the wireless telecommunications infrastructure) is again represented by the two-lined arrows between the mobile devices 14 and 16 and the cells 10 and 12.

Accordingly, on basis of the wireless connection of a respective mobile phone with the wireless telecommunications infrastructure of the mobile phone telecommunications network, the mobile phone or smart phone may be used for surfing in the worldwide web, i.e. for accessing web servers in the internet, and also for accessing e-mail servers for e-mail communication. For example, the mobile phone or smart phone may be provided with a local e-mail client which allows to access an e-mail server on basis of relevant e-mail protocols such as POP, IMAP, and SMTP, under the intermediation of the infrastructure of the mobile phone telecommunications network. An exemplary e-mail server is included under reference sign 20 and an exemplary web server is included under reference sign 22 in the diagram of Fig. 1, with the arrow between cloud 18 and the servers representing the connection of these servers with the internet on basis of the relevant protocols and standards. Such a server may have a functionality to send short messages via the wireless telecommunications infrastructure of the mobile phone telecommunications network, as represented by the two-line arrow between servers 20, 22 and cells 10.

State of the art mobile phones and, in particular, smart phones are also adapted to directly access the internet e.g. via a wireless local area network (WLAN) according to an appropriate WLAN standard. This is represented in Fig. 1 by two access points 24 and 26 which allow a direct internet access and direct internet connection of the smart phones 14 and 16 without intermediation of the wireless telecommunications infrastructure 10, 12 of the mobile phone telecommunications network. If both ways to communicate are possible, generally the user may decide which communication link shall be used or the smart phone uses one of the two communication links according to a certain preference, e.g. in view of communication costs.

According to the invention, a system as exemplified in Fig. 1 is implemented and used in a particular way, to allow e-mail communication in such a way, that advantages of communication on basis of short messages (text messages (SMS) or multimedia messages (MMS)) are achieved. Short messages including MMS may even generally be substituted by e-mails on basis of the present invention.

The problem of e-mail communication is, that e-mails can only be sent to persons or receiving devices, for which the e-mail address is known. For e-mail communication via the internet the e-mail address is formed by a local part and a domain part generally in the form of "local-part"@"domain-part",
wherein the domain part has the form "domain-name"."top-level-domain-indication". An e-mail address according to this convention is for example clive@your-e-mail-provider.com, where "clive" is the local part chosen by a user presumably having the name Clive, and "your-e-mail-provider.com" being the domain part chosen by a certain e-mail provider. This e-mail service provider would have a database in which the local part or the complete e-mail address is associated to a particular e-mail account, so that the user Clive can access the e-mails sent to him, e.g. by using a local e-mail client (e.g. according to POP or IMAP standard) and that he can send e-mails using his local e-mail client for example according to the SMTP standard. The e-mail client would access for procuring incoming e-mails and sending outgoing e-mails a respective server of the e-mail service provider.

Additionally or alternatively, the e-mail service provider might offer the possibility to use a kind of e-mail client in the form of a web front end of a webmail service. To this end, the user would access via internet a remote web server of the e-mail service provider using a browser program or browser functionality of his computer or smart phone or mobile phone, for reading incoming e-mails and for sending outgoing e-mails. Often, the user front end provides functionalities which allow the user to have an address book of e-mail contacts. There might also be a notification functionality which informs on receipt of incoming e-mails by sending a notification short message to a mobile phone number defined by the user.

Short messages have the big advantage that a respective short message can be sent to any mobile phone user whose mobile phone number is known. For most persons remote communication using mobile phones, which of course involves dialing of mobile phone numbers or selection of mobile phone numbers stored in a memory of the mobile phone, is the basic form of remote communication. There are many users who even do not have an e-mail account or do not have at least access to an e-mail account. It is an object of the invention to extend e-mail communication to persons who presently do not have an e-mail account or do not have access to an e-mail account, and to enable e-mail communication between persons who are not aware of their respective e-mail address.

A core feature of the present invention according to a first aspect is the use of the mobile phone number as local part of a respective e-mail address. It is not just an arbitrary decision to use the mobile phone number as part of the e-mail address. According to the concept of the invention an e-mail service provider provides e-mail accounts, to which each a respective mobile phone number which uniquely identifies a particular mobile device in a mobile phone telecommunications network is associated, with an e-mail address being registered for the respective e-mail account which includes the mobile phone number in the local part. This offers the advantage that a user using his mobile phone or smart phone can send an e-mail to any of his phone contacts, for which the mobile phone number is known. For phone contacts, which have a corresponding e-mail account with the e-mail address on basis of the mobile phone number, normal e-mail communication according to the conventional practice may take place, except for the particularily chosen e-mail addresses. For mobile phone contacts for which there is no such e-mail account, the mobile phone user nevertheless can send an e-mail on basis of the known mobile phone number, since the data communications infrastructure of the e-mail service provider can nevertheless contact the other user on basis of the mobile phone number included in the e-mail address, for example by sending a short message to this user (i.e. to the mobile phone or smart phone registered under this mobile phone number in the mobile phone telecommunications network).

Fig. 1 also represents such a system and method of the invention according to a preferred embodiment. Servers 20 and 22 represent a web server and an e-mail server of the e-mail service provider. A database of the e-mail service provider, in which relevant data of the customers of the e-mail service provider are registered, is represented by symbol 23. The database, according to the invention, includes data records defining e-mail addresses which include a respective mobile phone number in the local part. Servers 20 and 22 may be connected with another server providing additional functionality, e.g. a server implementing graphics or image personalization technology, which might be used to offer personalized graphics or image contents for e-mails (see below). Of course, different functionalities represented by the mentioned servers can be realized on basis of only one server or, if desired, a server farm.

In principle, it would be possible that the data communications infrastructure of the e-mail service provider includes the text contents and possibly image or other contents of a respective e-mail into the short message to be sent to the user presently having no e-mail account. However, instead it is preferred that an invitation short message is sent to the other user, inviting to access the web user interface of a webmail service of the e-mail service provider, to view the e-mail addressed to this user, possibly to answer to this e-mail by sending a return e-mail or/and for registering as user of the e-mail service provider by registering a corresponding e-mail account or assume the ownership of a preregistered e-mail account which was preregistered on basis of the e-mail having the mobile phone number included in the local part of the e-mail address. The e-mail service provider generally will be interested to increase the number of users, so that there can be an incentive for not yet regularly registered users to have a full e-mail account. To this end, the e-mail service provider might offer additional services, for example the possibility to include graphical or image contents into respective e-mails and having extended address book functionalities, for example of such kind that a sort of social network can be built.

A business model of the e-mail provider may comprise that certain particular services are only open for users who pay a certain monthly fee or a certain fee on a pay-on-use basis. For example, the number of contacts may be limited for a free account and a greater number of contacts or even an unlimited number of contacts may be possible for an account liable to pay costs. Further, the e-mail service provider can offer advertising for third parties, e.g. within the web front end of the webmail service or included in image or graphical contents which can be included in respective e-mails.

Concerning the mentioned graphics or image contents for e-mails, it is proposed to an independent aspect of the invention that personalized graphics or image contents can be included in a respective e-mail, on basis of graphics or image personalization technology. Concerning this aspect of the invention it is preferred but not necessary that the respective e-mails have e-mail addresses which include a mobile phone number in the local part.

In the following, some scenarios of possible implementations and possible features of a system and method according to the invention are given.

It is assumed that the e-mail service provider providing for the e-mail addresses on basis of the mobile phone number uses the domain KRASMS, so that the e-mail addresses e.g. have the format "mobile-phone-number"@krasms.com. A corresponding e-mail having such an e-mail address may be denoted as KRASMS or - shorter - KMS, in view of the aspect that such an e-mail shall be an alternative for a user for using short messages (SMS) or might even substitute short messages (SMS). A server or servers of the telecommunication infrastructure of this e-mail service provider might be denoted as KRASMS SERVER or - shorter - KMSERV. The abbreviations SP1 and SP2 refer to SMART PHONE USER 1 and SMART PHONE USER 2, or SMART PHONE 1 and SMART PHONE 2, respectively. The abbreviation SMS refers of course to a conventional SHORT MESSAGE SERVICE or the electronic message itself sent on basis of such a short message service. If the e-mail service provider offers services with respect to image or graphics contents of e-mails, a corresponding server serving as graphics or image processor or for generating graphic or image contents or just offering pregenerated image and graphics contents might additionally be provided. For example, such a server might be based on the DirecType^{®} Technology of Deutsch Technologies GmbH, Dresden, Germany (see www.directype.org) and accordingly might be denoted as DIRECTYPE SERVER or - shorter - DTS.

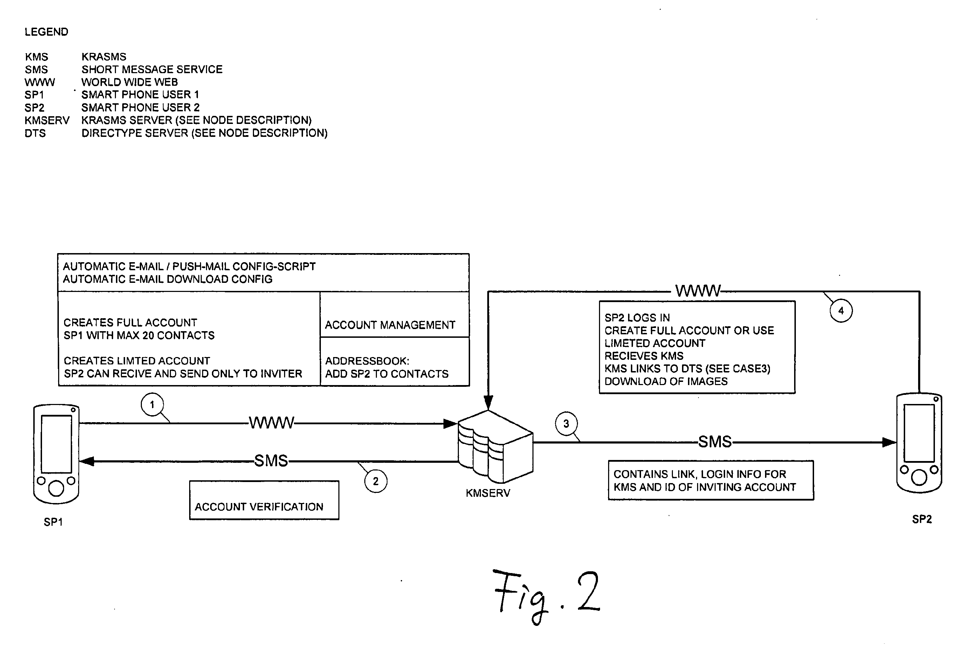

A first case (case 1) illustrated in Fig. 2 is a case where SP1 and SP2 are not yet customers of the e-mail service provider KASMS. Fig. 2 exemplifies an registration and invitation process.

### The arrow 1 denoted with WWW represents a first stage as follows:

User SP1 accesses via internet (world wide web = www) a web page of KRASMS and registers a free full account, which allows him to define 20 contacts for e-mail communication via KRASMS. An account is registered which has an e-mail address formed from the mobile phone number and the domain of KRASMS, such as 0172 ... 156@krasms.com or - taking also into account the national code of Germany - 0049172 ... 156@krasms.com.

After registration of this account an SMS is sent to SP1 for validation of the registered account (arrow 2, see below the second stage). This SMS may include a link to KMSERV, which allows to identify SP1 by following this link. This safeguards that the user who registered the account is indeed user SP1 having the mobile phone number registered for this account. Instead of including a link the SMS might also call for sending a return SMS.

Depending on the smart phone or mobile phone of SP1, the SMS or another SMS might include configuration data which allows to configure a local e-mail client of the smart phone, so that the respective e-mail server of KRASMS can be accessed for sending and receiving e-mails. Alternatively, and of course in cases where a configuration of an e-mail client is not possible on basis of data included in an SMS, the web pages of KRASMS of course can give instructions how the local e-mail client should be configured with respect to server names, account information and the like, so that the smart phone can access the server to procure incoming e-mails and access a server for providing outgoing e-mails.

For using the web front end of the webmail service of KRASMS, the web page visited by SP1 may offer to register a bookmark in the browser of SP1 and might register automatically or on request cookie data in the browser of SP1, so that repeated access to the e-mail account and its web front end is facilitated.

After registering e-mail account SP1 can enter further data, such as name, a password for web access and the like. Further, SP1 might start to communicate on basis of KRASMS, namely by sending an e-mail to one of his mobile phone contacts, namely user SP2. To this end, SP1 might include SP2 in his contact list via the web front end of KRASMS by entering the mobile phone number of SP2. Alternatively, if provided by the e-mail service provider, SP1 might use the local e-mail client using the mobile phone number of SP2 as local part of a corresponding e-mail address having the domain part krasms.com.

On entering such an mobile phone number in the web front end and sending an e-mail from the web front end or on receiving the e-mail from the local e-mail client having this particular mobile phone number, computer means at KRASMS will check whether SP2 has already an account at KRASMS. If this is the case, the e-mail will be provided to SP2, either for displaying in a web user interface of the webmail service or for downloading of the e-mail by a local e-mail client of the smart phone SP2.

If SP2 has not yet an account at KRASMS, a limited account will be generated for SP2 and the e-mail sent to SP2 from the web front end or from the local e-mail client will be stored in the computer and server system of KMSERV. Further, an invitation SMS will be sent from the computer and server system of KRASMS taking the mobile phone of the contact SP2 as defined by SP1 in his contact list or taken from the e-mail address of the e-mail provided to the outgoing mail server of KRASMS (arrow 3, see below the third stage).

Arrow 2 denoted with SMS represents a second stage, including the sending of the SMS to SP1 for achieving a authentification response from SP1, either on basis of a link to KMSERV or by calling for a response SMS.

Arrow 3 denoted with SMS represents a third stage, including the sending of an invitation SMS to SP2. In this invitation SMS, SP2 is notified that SP1 has invited him to register at KRASMS and that there is a message for him. The invitation SMS preferably includes a link to a web server, e.g. KMSERV, which leads SP2 to a web page associated to the preregistered limited account.

Arrow 4 denoted with WWW represents a fourth stage, including access of SP2 to this web page by following the web link in the invitation SMS. SP2 has now access to his limited account and can display (view and read) the deposited message (e-mail having the e-mail address including the mobile phone number of SP2 = KRASMS) of SP1. SP2 is offered to register a full free account as did SP1, including the possibility to configure a local e-mail client on smart phone SP2 or receiving bookmark and cookie data for browser access to the web front end of the webmail service.

Without registering as free full account SP2 can only answer to e-mails from SP1. By registering a free full account, SP2 can define 20 contacts for e-mail communication.

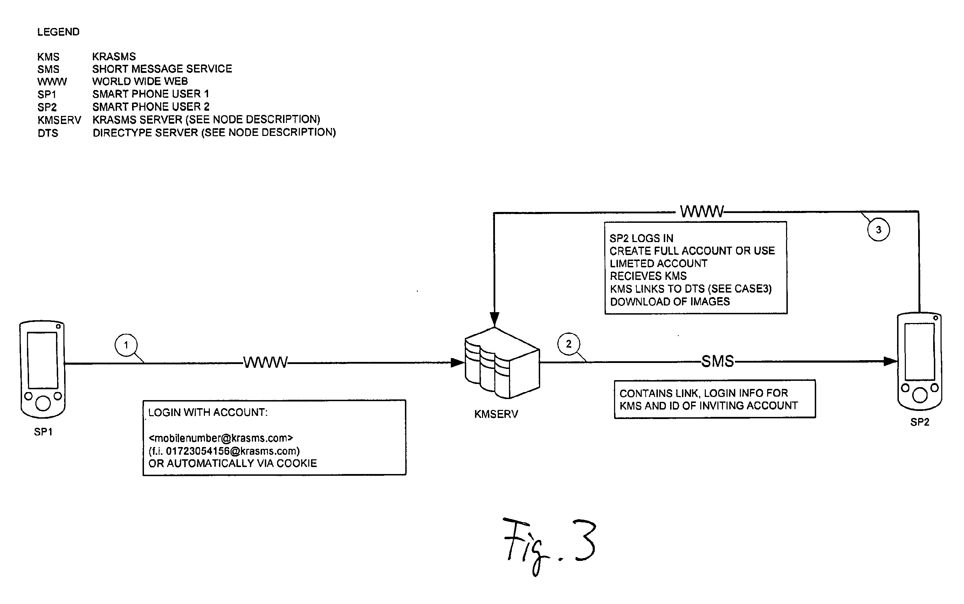

The diagram of Fig. 3 illustrates a second case (case 2), namely a scenario according to which SP1 is already customer of KRASMS and SP2 is not yet customer of KRASMS and which involves an invitation process concerning SP2.

It is assumed that SP1 uses the web front end of the webmail service of KRASMS. Stage 1 is represented by arrow 1 denoted with WWW and involves that SP1 logs manually or on basis of cookie data previously provided to the browser into the web front end of the webmail service, preferably on basis of his e-mail address including the mobile phone number in the local part. SP1 then adds SP2 in his contact list by entering the mobile phone number of SP2. As far as SP2 is not yet customer of KRASMS, a limited account is generated for SP2. SP1 can now send an e-mail message to SP2 on basis of the e-mail address of this limited account having the mobile phone number as local part. This e-mail will be stored in the system of KRASMS and an invitation SMS is sent to SP2. The following stages according to arrows 2 and 3 are as set forth for the arrows 3 and 4 of the scenario according to Fig. 2.

If the e-mail service provider offers the e-mail communication on basis of local e-mail clients, then arrow 1 could represent the sending of an e-mail from SP1 having the e-mail address on basis of the mobile phone number of SP2 by accessing the outgoing mail server of KRASMS via internet.

It should be mentioned that access via internet for server access (incoming mail server, outgoing mail server and web server) does not necessarily mean that there is direct connection with the internet via a WLAN access point, such as access points 24 and 26 of Fig. 1, or the like. Instead, this data communication via internet may include data communication over the mobile phone telecommunications network using wireless telecommunications infrastructure thereof represented by cells 10 and 12 in Fig. 1.

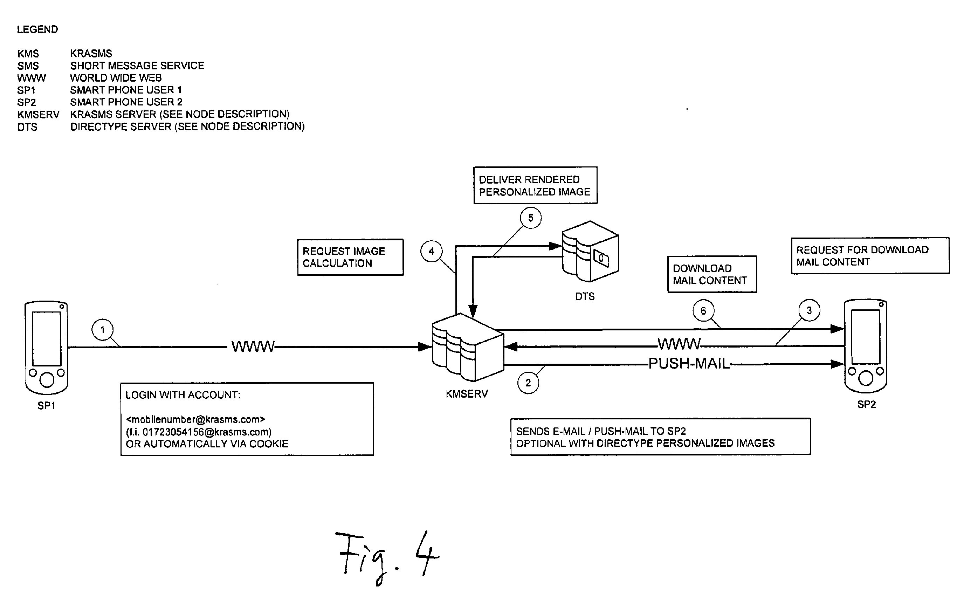

For a further possible scenario (third case, case 3) it is referred to Fig. 4. According to a first stage represented by arrow 1 denoted with WWW, SP1 logs in the web front end of KMSERV on basis of his e-mail address "mobile-phone-number@krasms.com", manually or automatically on basis of preset cookie data. Then SP1 selects SP2 from his contact list. SP1 then might decide to either write a plain text message to SP2 or to send an image message using the DirecType^{®} functionality offered by the e-mail service provider on basis of DirecType^{®} server DTS. In the latter case, SP1 selects from a list of different images one to be sent to SP2 and enters a text message in a corresponding field of the web front end. The image or data identifying the selected image and the text message are then transferred to server DTS, where an image including the text message is generated (see stage 4). The generated, personalized image will then be sent to KMSERV (see stage 5), so that SP1 can use a preview function to see the personalized image which includes the text message in form of image elements forming characters and words. If SP1 acknowledges his agreement with this personalized image message, the message will be stored at KMSERV under an encrypted ID which is automatically associated to the message. Alternatively, only data identifying the selected image and the entered text message and possibly additional definition data may be stored at KMSERV for regeneration of the personalized image message at a later point in time, when SP2 looks after his e-mail. The acknowledgement of agreement with the personalized image method by SP1 may trigger the sending of an e-mail to SP2, or the web front end may require an additional acknowledgement for indeed sending this e-mail. From the point of view of SP1 this corresponds to having sent the image message, and SP1 may continue to interact with the web front end, e.g. to look after his e-mail inbox and e-mail outbox, e.g. for deleting older messages.

Stage 2 represented by arrow 2 denoted with PUSH-MAIL involves sending of an e-mail, preferably a push-e-mail to SP2, preferably instantaneously. This e-mail either contains directly a plain text message or, if a personalized image was generated by DirecType^{®}, HTML-code including a reference to the image message, or, alternatively, the data allowing the regeneration of the image message on KMSERV, so that on viewing of this HTML-e-mail SP2 automatically downloads this personalized image message and displays the same on the display (see stage 3), namely either the prestored image message or the regenerated image message. The latter would involve data communication from KMSERV to DTS providing the data defining the image message and from DTS to KMSERV providing the regenerated image message. The user of SP2 gets the impression that the image message was sent directly from SP1.

Alternatively, SP2 might have no appropriately configured local e-mail client. Instead of sending an e-mail to SP2, a short message could be sent which notifies that there is a new e-mail in the inbox of the e-mail account of SP2, so that SP2 then can access with a local browser of smart phone SP2 the web front end of his e-mail account to view the e-mail received from SP1. In case of a plain text e-mail this text information would be shown to SP2. In case of the personalized image message the same would be displayed, namely either the prestored image message or the regenerated image message. The latter would involve data communication from KMSERV to DTS providing the data defining the image message and from DTS to KMSERV providing the regenerated image message. To this end, the web front end would respond to the HTML reference included in the e-mail by accessing the stored image message or the definition data and displaying the prestored or regenerated image message.

Stage 3 represented by arrow 3 denoted with WWW includes the downloading of the image message by the local e-mail client (if provided) in response to the received HTML-mail when SP2 views his e-mail in the inbox of the local e-mail client. Of course, in principle it is possible that the image message is directly included in the e-mail sent to SP2. However, in view of memory constraints of a normal smart phone and to avoid unnecessary data transfer volume it is preferred that a respective e-mail does not include the image but only a link to the image or corresponding definition data, which would include the ID generated according to stage 1.

Stage 4 represented by arrow 4 involves the transmission of the selected image or code identifying this image and the text message of SP1 to DTS and stage 5 involves the transmission of the generated personalized image including the text message from DTS back to KMSERV. Instead of storing this personalized image including the text message at KMSERV for transmission to SP2 on request on basis of the HTML-mail or displaying this personalized image in the web front end, it is possible (as already set forth) and even preferred to minimize the volume of data to be stored, only to store under the ID already mentioned the text information and identification code identifying the image selected by SP1 and to generate the personalized image to be sent to SP2 or to be shown in the web front end only in response to a corresponding request issued when SP2 selects the e-mail for display, either in the local e-mail client of SP2 or in the web front end of his e-mail account. Accordingly, stages 4 and 5 would be repeated each time when SP2 reads or views the received e-mail.

Stage 6 represented by arrow 6 involves the transmission of the generated personalized image to SP2 on request by the local e-mail client.

Personalized images generated by the DirecType^{®} processor of DTS could include, besides the text message shown by image elements forming characters and words, also advertisements, logos, product and company names and the like, as already included in the images selectable by the user or, preferably, as defined by administration data, so that on basis of the same basic image different advertisements can be included.

Possible basic functions and practical implementations of the KRASMS server / server cluster KMSERV are indicated in the following:

### WWW Server

- HTML site1 with data-base backend
content of site: login
CREATE login of USE login

| | | |
|---|---|---|
| VIA mobilenumber | OR | login automatically by cookie if ID already exists |
| | AND | go to ID-microsite |
| password | | |

- HTML site2 with data-base backend
content of site: contact administration
CREATE contact login or USE contact

| | |
|---|---|
| INPUT | mobilenumber name |

max 20 contacts per user, if contact is created > sms with link to login site will be sent
- HTML site3 with data-base backend
content of site: send KRASMS

| | |
|---|---|
| CREATE | message in the txt field |
| PREVIEW | message in the graphic field |
| SWITCH | styles |
| SEND | KRASMS to chosen contacts contact(s) via |
| | dropdown |
| | via E-Mail/ Push-Mail feed for preview |
| | graphic window is generated |
| | via HTML correction to DirecType^{®} |
| | server |
| DELETE | sent and received messages |

- E-Mail server

| | |
|---|---|
| SEND | Krasms-E-Mails (to KRASMS Customers) |
| RECEIVE | Krasms-E-Mails (from KRASMS |
| | Customers) |
| SEND | SMS (first contact link) |
| KRASMS | E-Mail contains link with encrypted txt to |
| | DirecType^{®} server (dynamic image) |

- Automatic scalable cluster with a given max amount of accounts
- Automatic load balancing between servers
- Interaction with DirecType^{®} servers (Image generation)
- Database for accounts, address books, messages

Possible basic functions and practical implementations DirecType^{®} server / server cluster DTS are indicated in the following:
- Creates images out of text and template
- Use of DirecType^{®} technology
- Scaleable Rendering Cluster
- Produced txt-images can contain "unremovable advertisements" in background
- "unremovable advertisements" administrated by the e-mail service provider or a third party provider offering this service to the e-mail service provider
- "unremovable advertisements" may include brand of products, company names and the like

Possible basic functions and practical implementations of a respective smart phone SP are indicated in the following:
- HTML-Client
- E-Mail-Client
- Capability of cookie handling
- all relevant hardware platforms and operating systems, such as MAC OS, SYMBIAN, WIN MOBILE, WIN CE.

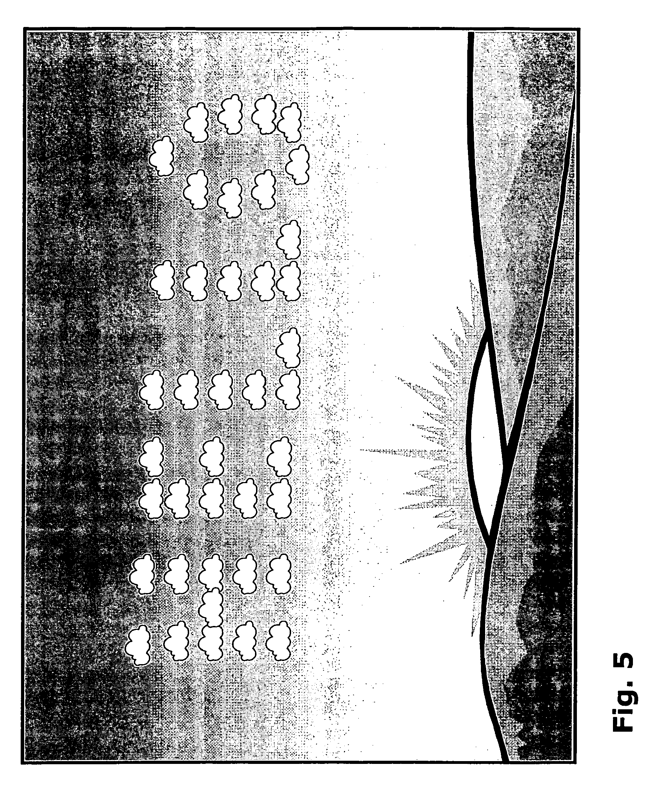

Fig. 5 illustrates the principle of including text information in an image by characters and words formed by image elements. In Fig. 4 the drawing of "a sunrise behind hills" represents a photo of such a "sunrise behind hills", and the small clouds represent a respective image element superimposed on the sunrise image and corresponding each to a small photo of a real cloud, so that the impression of a sunrise scene with real clouds is obtained although the viewers of course know that real clouds in the sky will never form characters and even words. Assuming that a corresponding personalized image as indicated in Fig. 5 was sent by SP1 to SP2, SP1 did select the sunrise photo in the web front end of his e-mail account and entered the word "hello" in a corresponding text field of the web front end. The DirectType^{®} server then superimposed cloud image elements on the sunrise photo to form the characters "H", "E", "L", "L" and "O" and arranged these cloud-characters to form the word "HELLO". Of course, longer words and even sentences may be formed, such as for example "TINA, I LOVE YOU!" if SP2 has the name Tina and SP1 wants to declare his love for Tina in this particular way using a personalized text-image-message.

DirecType^{®} technology offers also other ways of personalizing images. For example the text information to include in the personalized image might define a mask which defines the superposition of two images, one image being in the foreground and the other image being in the background. In such a case, for example, the clouds of Fig. 5 would correspond to "windows", which allow to look through the sunrise photo on a second photo, so that the clouds may be formed by something completely different.

Again, referring to the more simple realisation of forming characters and words by image elements, such as clouds, it is of course possible to use a plurality of different image elements of the same kind, so that the clouds forming the word "HELLO" are not identic, so that a more realistic impression is obtained.

For information on DirecType^{®} technology it is referred to information available at www.directype.org and www.deutsch-technologies.de and www.sdv.de. In particular, it is referred to documents which can be downloaded from www.directype.org, in particular the documents "DirecType Product Overview", "Manual of DirecType® 2.0" and "Manual of DirecType® 1.5". Further, it is referred to the different DirecType^{®} software products identified in these documents.

The invention, according to a first independent aspect, proposes e-mail communication using e-mail addresses including a mobile phone number in the domain part. Such an e-mail address uniquely identifies a particular mobile device in a mobile phone telecommunications network and therefore offers the possibility to offer e-mail communication to a user of this particular mobile device, even if the user has not yet an e-mail address or not yet access to an e-mail account. The invention, according to a second independent aspect, further proposes to directly or indirectly include personalized graphical or image contents into a respective e-mail for making the e-mail communication more attractive. E-mail communication according to one or both of these proposals might substitute short message communication using SMS or MMS between mobile phones and other mobile devices having mobile phone functionality.

## Claims

1. System for e-mail communication between mobile devices, comprising a mobile phone telecommunications network having wireless telecommunications infrastructure, a plurality of mobile devices in the form of at least one of mobile phones and other mobile devices having mobile phone functionality and data communication infrastructure of at least one e-mail service provider allowing direct or indirect e-mail communication between said mobile devices,
wherein each mobile device is uniquely identified in the mobile phone telecommunications network by a respective mobile phone number allowing, on basis of at least one mobile phone telecommunications standard, to call a respective other mobile device for voice communication and to receive a call from a respective other mobile device for voice communication, and
wherein each mobile device is adapted for at least one of
a) direct e-mail communication including sending and receiving e-mails using a local e-mail client functionality or a local e-mail client program of the mobile device, the local e-mail client functionality or local e-mail client program being adapted to access at least one remote e-mail server of said data communications infrastructure at least for sending and possibly for receiving e-mails, said access involving wireless data communication via at least one of the mobile phone telecommunications network and a wireless data communication network being part of or connected with the internet,
and
b) indirect e-mail communication involving access to at least one remote web server of said data communications infrastructure which allows the use of a webmail service of the e-mail service provider, the webmail service providing e-mail communication including sending and receiving e-mails and a web user interface to be accessed using a browser functionality or browser program of the mobile device, said access involving wireless data communication via at least one of the mobile phone telecommunications network and a wireless data communication network being part of or connected with the internet,
wherein said e-mail communication is based on at least one e-mail communication standard, according to which the destination of a respective e-mail is given by a destination e-mail address included in the respective e-mail, said destination e-mail address having a domain part corresponding to a domain name used by the e-mail service provider and a local part identifying a particular e-mail account registered at the e-mail service provider,
**characterized in that** e-mail accounts of said e-mail service provider are associated to a respective mobile phone number uniquely identifying a particular mobile device in the mobile phone telecommunications network, wherein for each e-mail account an e-mail address is registered in a database of the e-mail service provider, said e-mail address including the respective mobile phone number in the local part and being enabled for at least one of said direct and indirect e-mail communication.

2. System according to claim 1, wherein the wireless telecommunications infrastructure is adapted to communicate short messages between or to mobile devices via at least one short message service (SMS) on basis of said at least one mobile phone telecommunications standard,
wherein a respective short message includes destination information which comprises a respective mobile phone number so that the short message is communicated by the short message service (SMS) to that mobile device which is uniquely identified by that mobile phone number in the mobile phone telecommunications network.

3. System according to claim 2, wherein said data communications infrastructure is adapted to send, via at least one short message service (SMS), at least one short message to a respective mobile device which is uniquely identified by a mobile phone number to which a respective e-mail account is associated or shall be associated.

4. System according to claim 2 or 3, wherein said data communications infrastructure is adapted to send, via at least one short message service (SMS), at least one short message to a respective mobile device which is uniquely identified by a mobile phone number included in the local part of a destination e-mail address of an e-mail.

5. System according to at least one of claims 2 to 4, wherein at least one web server of the data communications infrastructure provides a web user interface to be accessed from a computer connected to the internet using an browser functionality or browser program of the computer or to be accessed from a mobile device using a/the browser functionality or browser program of the mobile device, wherein said web user interface allows to register an e-mail account in a database of the e-mail service provider, the e-mail account being associated to a mobile phone number uniquely identifying a/the mobile device in the mobile phone telecommunications network, wherein the registration of the e-mail account involves the registration of an e-mail address having said mobile phone number included in the local part.

6. System according to claim 5, wherein the data communications infrastructure is adapted to automatically send a short message into which destination information is included which comprises said mobile phone number associated to said e-mail account and to only enable said e-mail account for at least one of direct and indirect e-mail communication using the e-mail address having the mobile phone number in the local part if a predefined response is received on said short message.

7. System according to claim 6, wherein the predefined response is at least one of a predefined access to a web page hosted by the/a web server of the data communications infrastructure, preferably following a web link included in said short message, and a response short message sent from the mobile device identified by said mobile phone number to a predefined mobile phone number included in said short message.

8. System according to one of claims 2 to 7, wherein the data communications infrastructure is adapted to automatically send a short message on basis of an e-mail provided by direct or indirect e-mail communication for sending to a destination e-mail address, if no e-mail account associated to a mobile phone number taken from the local part of said destination e-mail address is registered in the database of the e-mail service provider, said short message including destination information which comprises said mobile phone number.

9. System according to one of claims 2 to 8, wherein the data communications infrastructure is adapted to automatically register an e-mail account in a database of the e-mail service provider on basis of an e-mail provided by direct or indirect e-mail communication for sending to a destination e-mail adress, if no e-mail account associated to a mobile phone number taken from the local part of said destination e-mail address is registered in the database of the e-mail service provider, wherein the e-mail account is automatically registered in association to said mobile phone number uniquely identifying a/the mobile device in the mobile phone telecommunications network,
wherein the registration of this e-mail account involves the registration of said destination e-mail address as e-mail address.

10. System according to claim 9, wherein the data communications infrastructure is adapted to automatically send a short message into which destination information is included which comprises said mobile phone number taken from the local part and preferably to only enable said e-mail account at least for indirect e-mail reading access using the webmail service, if desired for at least one of direct and indirect e-mail communication using the e-mail address having the mobile phone number in the local part, if a predefined response is received on said short message.

11. System according to one of claims 1 to 10, wherein enabled direct or indirect e-mail communication includes sending and receiving e-mails having at least one of direct and indirect graphical or image contents or at least includes access to a respective e-mail for displaying relevant contents thereof including at least one of direct and indirect graphical or image contents.

12. System according to claim 11, wherein said direct and indirect graphical or image contents is personalized graphical or image contents and is/was generated on basis of text data and image or graphics data by an image or graphics processor.

13. System for e-mail communication between mobile devices, comprising a mobile phone telecommunications network having wireless telecommunications infrastructure, a plurality of mobile devices in the form of at least one of mobile phones and other mobile devices having mobile phone functionality and data communication infrastructure of at least one e-mail service provider allowing direct or indirect e-mail communication between said mobile devices,
wherein each mobile device is uniquely identified in the mobile phone telecommunications network by a respective mobile phone number allowing, on basis of at least one mobile phone telecommunications standard, to call a respective other mobile device for voice communication and to receive a call from a respective other mobile device for voice communication, and
wherein each mobile device is adapted for at least one of
a) direct e-mail communication including sending and receiving e-mails using a local e-mail client functionality or a local e-mail client program of the mobile device, the local e-mail client functionality or local e-mail client program being adapted to access at least one remote e-mail server of said data communications infrastructure at least for sending and possibly for receiving e-mails, said access involving wireless data communication via at least one of the mobile phone telecommunications network and a wireless data communication network being part of or connected with the internet,
and
b) indirect e-mail communication involving access to at least one remote web server of said data communications infrastructure which allows the use of a webmail service of the e-mail service provider, the webmail service providing e-mail communication including sending and receiving e-mails and a web user interface to be accessed using a browser functionality or browser program of the mobile device, said access involving wireless data communication via at least one of the mobile phone telecommunications network and a wireless data communication network being part of or connected with the internet,
wherein said e-mail communication is based on at least one e-mail communication standard, according to which the destination of a respective e-mail is given by a destination e-mail address included in the respective e-mail, said destination e-mail address having a domain part corresponding to a domain name used by the e-mail service provider and a local part identifying a particular e-mail account registered at the e-mail service provider,
**characterized in that** direct or indirect e-mail communication includes sending and receiving e-mails having at least one of direct and indirect graphical or image contents or at least includes access to a respective e-mail for displaying relevant contents thereof including at least one of direct and indirect graphical or image contents, said direct and indirect graphical or image contents being personalized graphical or image contents and being generated on basis of text data and image or graphics data by an image or graphics processor.

14. System according to one of claims 11 to 13, wherein direct graphical or image contents is at least one of graphical or image data and at least one image or graphics file included in or attached to a respective e-mail.

15. System according to claim 14, wherein in case of direct e-mail communication the local e-mail client program or local e-mail client functionality is adapted to automatically display said direct graphical or image contents and wherein in case of indirect e-mail communication the web user interface of the webmail service is adapted to automatically display said direct graphical or image contents.

16. System according to one of claims 11 to 15, wherein indirect graphical or image contents is at least one of graphical or image data and at least one image or graphics file hosted on a server of the data communications infrastructure or on a server connected therewith,
wherein a link leading to said graphical or image contents is included in a respective e-mail.

17. System according to claim 16, wherein in case of direct e-mail communication the local e-mail client program or local e-mail client functionality is adapted to automatically access and display said indirect graphical or image contents, said access involving wireless data communication via at least one of the mobile phone telecommunications network and said wireless data communication network being part of or connected with the internet, and wherein in case of indirect e-mail communication the web user interface of the webmail service is adapted to automatically access and display said indirect graphical or image contents.

18. System according to one of claims 11 to 17, wherein a web server of the data communications infrastructure or connected therewith has a web user interface associated to an/the image or graphics processor adapted to generate graphical or image contents on basis of at least one of user input via the user interface and graphics or image template data, wherein said user interface can be accessed using a browser functionality or browser program of a respective mobile device and preferably can be accessed via or is included in the web user interface of the webmail service, wherein generated graphical or image contents can be included as direct or indirect graphical or image contents in a respective e-mail to be sent to a destination e-mail address.

19. System according to claim 18, wherein said image or graphics processor is adapted to generate graphical or image contents, which comprises at least one predefined first image or graphics template contents on which is superimposed at least one predefined second image or graphics template contents, wherein at least one of an arrangement or repeated arrangement of said second image or graphics contents or at least one graphics or image element thereof with respect to the first image or graphics contents and a kind of superposition of said first and second image and graphics contents is defined by user input.

20. System according to claim 19, wherein user input comprises text input which defines a repeated arrangement of said second image or graphics contents or at least one graphics or image element thereof so said characters are formed from said repeatedly superimposed contents or element which display said text within said first image or graphics contents.

21. System according to claim 19 or 20, wherein the web user interface allows the selection of at least one of the first and second image or graphics template contents for the superposition from a plurality of different image or graphics template contents.

22. System according to one of claims 19 to 21, wherein said image or graphics processor is adapted to include into said superposition at least one predefined third image or graphics template contents or text contents on basis of administration data.

23. System according to one of claims 1 to 22, wherein for enabling or facilitating direct e-mail communication for a particular mobile device said data communications infrastructure is adapted to automatically send or to send on request a short message into which destination information is included which comprises the mobile phone number of said particular mobile device and into which configuration data are included which enable the local e-mail client program or the local e-mail functionality of said mobile device to access said at least one remote e-mail server for said direct e-mail communication.

24. Method of e-mail communication between mobile devices in the form of at least one of mobile phones and other mobile devices having mobile phone functionality using data communication infrastructure of at least one e-mail service provider allowing direct or indirect e-mail communication between said mobile devices,
wherein each mobile device is uniquely identified in a mobile phone telecommunications network having wireless telecommunications infrastructure by a respective mobile phone number allowing, on basis of at least one mobile phone telecommunications standard, to call a respective other mobile device for voice communication and to receive a call from a respective other mobile device for voice communication, and
wherein a respective each mobile device is used for at least one of
a) direct e-mail communication including sending and receiving e-mails using a local e-mail client functionality or a local e-mail client program of the mobile device to access at least one remote e-mail server of said data communications infrastructure at least for sending and possibly for receiving e-mails, said access involving wireless data communication via at least one of the mobile phone telecommunications network and a wireless data communication network being part of or connected with the internet,
and
b) indirect e-mail communication involving access to at least one remote web server of said data communications infrastructure for using a webmail service of the e-mail service provider for e-mail communication including sending and receiving e-mails, wherein a web user interface is accessed using a browser functionality or browser program of the mobile device, said access involving wireless data communication via at least one of the mobile phone telecommunications network and a wireless data communication network being part of or connected with the internet,
wherein said e-mail communication is based on at least one e-mail communication standard, according to which the destination of a respective e-mail is given by a destination e-mail address included in the respective e-mail, said destination e-mail address having a domain part corresponding to a domain name used by the e-mail service provider and a local part identifying a particular e-mail account registered at the e-mail service provider,
**characterized in that** in said e-mail communication e-mail addresses are used which include in the local part a respective mobile phone number uniquely identifying a particular mobile device in the mobile phone telecommunications network.

25. Method according to claim 24, wherein e-mail accounts of said e-mail service provider are associated to a respective mobile phone number uniquely identifying a particular mobile device in the mobile phone telecommunications network, wherein for each e-mail account an e-mail address is registered in a database of the e-mail service provider, said e-mail address including the respective mobile phone number in the local part and being enabled for at least one of said direct and indirect e-mail communication.

26. Method according to claim 24 or 25, wherein the wireless telecommunications infrastructure is used to communicate short messages between or to mobile devices via at least one short message service (SMS) on basis of said at least one mobile phone telecommunications standard, wherein a respective short message includes destination information which comprises a respective mobile phone number so that the short message is communicated by the short message service (SMS) to that mobile device which is uniquely identified by that mobile phone number in the mobile phone telecommunications network.

27. Method according to claim 26, wherein said data communications infrastructure sends, via at least one short message service (SMS), at least one short message to a respective mobile device which is uniquely identified by a mobile phone number to which a respective e-mail account is associated or shall be associated.

28. Method according to claim 26 or 27, wherein said data communications infrastructure sends, via at least one short message service (SMS), at least one short message to a respective mobile device which is uniquely identified by a mobile phone number included in the local part of a destination e-mail address of an e-mail.

29. Method according to at least one of claims 26 to 28, wherein at least one web server of the data communications infrastructure provides a web user interface which is accessed from a computer connected to the internet using an browser functionality or browser program of the computer or which is accessed from a mobile device using a/the browser functionality or browser program of the mobile device, wherein by interaction with said web user interface an e-mail account in a database of the e-mail service provider is registered, the e-mail account being associated to a mobile phone number uniquely identifying a/the mobile device in the mobile phone telecommunications network,
wherein the registration of the e-mail account involves the registration of an e-mail address having said mobile phone number included in the local part.

30. Method according to claim 29, wherein the data communications infrastructure automatically sends a short message into which destination information is included which comprises said mobile phone number associated to said e-mail account and only enables said e-mail account for at least one of direct and indirect e-mail communication using the e-mail address having the mobile phone number in the local part if a predefined response is received on said short message.

31. Method according to claim 30, wherein a web page hosted by the/a web server of the data communications infrastructure is accessed to give the predefined response, preferably following a web link included in said short message, or/and a response short message is sent from the mobile device identified by said mobile phone number to a predefined mobile phone number included in said short message to give the predefined response.

32. Method according to one of claims 26 to 31, wherein the data communications infrastructure automatically sends a short message on basis of an e-mail provided by direct or indirect e-mail communication for sending to a destination e-mail address, if no e-mail account associated to a mobile phone number taken from the local part of said destination e-mail address is registered in the database of the e-mail service provider, said short message includes destination information which comprises said mobile phone number.

33. Method according to one of claims 26 to 32, wherein the data communications infrastructure automatically registers an e-mail account in a database of the e-mail service provider on basis of an e-mail provided by direct or indirect e-mail communication for sending to a destination e-mail adress, if no e-mail account associated to a mobile phone number taken from the local part of said destination e-mail address is registered in the database of the e-mail service provider,
wherein the e-mail account is automatically registered in association to said mobile phone number uniquely identifying a/the mobile device in the mobile phone telecommunications network, wherein the registration of this e-mail account involves the registration of said destination e-mail address as e-mail address.

34. Method according to claim 33, wherein the data communications infrastructure automatically sends a short message into which destination information is included which comprises said mobile phone number taken from the local part and preferably only enables said e-mail account at least for indirect e-mail reading access using the webmail service, if desired for at least one of direct and indirect e-mail communication using the e-mail address having the mobile phone number in the local part, if a predefined response is received on said short message.

35. Method according to one of claims 24 to 34, wherein enabled direct or indirect e-mail communication includes sending and receiving e-mails having at least one of direct and indirect graphical or image contents or at least includes access to a respective e-mail for displaying relevant contents thereof including at least one of direct and indirect graphical or image contents.

36. Method according to claim 35, wherein said direct and indirect graphical or image contents is personalized graphical or image contents and is/was generated on basis of text data and image or graphics data by an image or graphics processor.

37. Method of e-mail communication between mobile devices in the form of at least one of mobile phones and other mobile devices having mobile phone functionality using data communication infrastructure of at least one e-mail service provider allowing direct or indirect e-mail communication between said mobile devices,
wherein each mobile device is uniquely identified in a mobile phone telecommunications network having wireless telecommunications infrastructure by a respective mobile phone number allowing, on basis of at least one mobile phone telecommunications standard, to call a respective other mobile device for voice communication and to receive a call from a respective other mobile device for voice communication, and
wherein a respective each mobile device is used for at least one of
a) direct e-mail communication including sending and receiving e-mails using a local e-mail client functionality or a local e-mail client program of the mobile device to access at least one remote e-mail server of said data communications infrastructure at least for sending and possibly for receiving e-mails, said access involving wireless data communication via at least one of the mobile phone telecommunications network and a wireless data communication network being part of or connected with the internet,
and
b) indirect e-mail communication involving access to at least one remote web server of said data communications infrastructure for using a webmail service of the e-mail service provider for e-mail communication including sending and receiving e-mails, wherein a web user interface is accessed using a browser functionality or browser program of the mobile device, said access involving wireless data communication via at least one of the mobile phone telecommunications network and a wireless data communication network being part of or connected with the internet,
wherein said e-mail communication is based on at least one e-mail communication standard, according to which the destination of a respective e-mail is given by a destination e-mail address included in the respective e-mail, said destination e-mail address having a domain part corresponding to a domain name used by the e-mail service provider and a local part identifying a particular e-mail account registered at the e-mail service provider,
**characterized in that** direct or indirect e-mail communication includes sending and receiving e-mails having at least one of direct and indirect graphical or image contents or at least includes access to a respective e-mail for displaying relevant contents thereof including at least one of direct and indirect graphical or image contents, said direct and indirect graphical or image contents being personalized graphical or image contents and being generated on basis of text data and image or graphics data by an image or graphics processor.

38. Method according to one of claims 35 to 37, wherein direct graphical or image contents is at least one of graphical or image data and at least one image or graphics file included in or attached to a respective e-mail.

39. Method according to claim 38, wherein in case of direct e-mail communication the local e-mail client program or local e-mail client functionality automatically displays said direct graphical or image contents and wherein in case of indirect e-mail communication the web user interface of the webmail service automatically displays said direct graphical or image contents.

40. Method according to one of claims 35 to 39, wherein indirect graphical or image contents is at least one of graphical or image data and at least one image or graphics file hosted on a server of the data communications infrastructure or on a server connected therewith,
wherein a link leading to said graphical or image contents is included in a respective e-mail.

41. Method according to claim 40, wherein in case of direct e-mail communication the local e-mail client program or local e-mail client functionality automatically accesses and displays said indirect graphical or image contents, said access involving wireless data communication via at least one of the mobile phone telecommunications network and said wireless data communication network being part of or connected with the internet, and wherein in case of indirect e-mail communication the web user interface of the webmail service automatically accesses and displays said indirect graphical or image contents.

42. Method according to one of claims 35 to 41, wherein a web server of the data communications infrastructure or connected therewith has a web user interface associated to the/an image or graphics processor, said image or graphics processor being used to generate graphical or image contents on basis of at least one of user input via the user interface and graphics or image template data, wherein said user interface is accessed using a browser functionality or browser program of a respective mobile device, preferably via or from within the web user interface of the webmail service, wherein generated graphical or image contents are included as direct or indirect graphical or image contents in a respective e-mail which is sent to a destination e-mail address.

43. Method according to claim 42, wherein said image or graphics processor generates graphical or image contents, which comprises at least one predefined first image or graphics template contents on which at least one predefined second image or graphics template contents is superimposed, wherein at least one of an arrangement or repeated arrangement of said second image or graphics contents or at least one graphics or image element thereof with respect to the first image or graphics contents and a kind of superposition of said first and second image and graphics contents is defined by user input entered into the web user interface.

44. Method according to claim 43, wherein into the web user interface user input is entered, comprising text input which defines a repeated arrangement of said second image or graphics contents or at least one graphics or image element thereof so said characters are formed from said repeatedly superimposed contents or element which display said text within said first image or graphics contents.

45. Method according to claim 43 or 44, wherein from the web user interface at least one of the first and second image or graphics template contents is selected from a plurality of different image or graphics template contents for the superposition.

46. Method according to one of claims 43 to 45, wherein said image or graphics processor includes into said superposition at least one predefined third image or graphics template contents or text contents on basis of administration data.

47. Method according to one of claims 24 to 46, wherein for enabling or facilitating direct e-mail communication for a particular mobile device said data communications infrastructure automatically sends or sends on request a short message into which destination information is included which comprises the mobile phone number of said particular mobile device and into which configuration data are included which enable the local e-mail client program or the local e-mail functionality of said mobile device to access said at least one remote e-mail server for said direct e-mail communication.
